(19)

Europäisches
Patentamt
European
Patent Office
Office européen
des brevets

(11) **EP 4 582 592 A1**

(12) **EUROPEAN PATENT APPLICATION**
published in accordance with Art. 153(4) EPC

(43) Date of publication:
**09.07.2025 Bulletin 2025/28**

(21) Application number: **23859705.8**

(22) Date of filing: **19.04.2023**

(51) International Patent Classification (IPC):
*C25B 9/00* (2021.01)    *C25B 1/04* (2021.01)
*C25B 9/19* (2021.01)    *C25B 11/031* (2021.01)

(52) Cooperative Patent Classification (CPC):
**C25B 1/04; C25B 9/00; C25B 9/19; C25B 11/031;**
Y02E 60/36

(86) International application number:
**PCT/JP2023/015597**

(87) International publication number:
**WO 2024/047934 (07.03.2024 Gazette 2024/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.08.2022 JP 2022138136**

(71) Applicants:
• **NATIONAL UNIVERSITY CORPORATION
YOKOHAMA NATIONAL UNIVERSITY
Yokohama-shi
Kanagawa 240-8501 (JP)**
• **SUMITOMO ELECTRIC INDUSTRIES, LTD.
Osaka-shi, Osaka 541-0041 (JP)**

(72) Inventors:
• **HIGASHINO, Takahiro**
**Osaka-shi, Osaka 541-0041 (JP)**
• **OKUNO, Kazuki**
**Osaka-shi, Osaka 541-0041 (JP)**
• **TAWARAYAMA, Hiromasa**
**Osaka-shi, Osaka 541-0041 (JP)**
• **HOSOE, Akihisa**
**Osaka-shi, Osaka 541-0041 (JP)**
• **MITSUSHIMA, Shigenori**
**Yokohama-shi, Kanagawa 240-8501 (JP)**
• **KURODA, Yoshiyuki**
**Yokohama-shi, Kanagawa 240-8501 (JP)**

(74) Representative: **Boult Wade Tennant LLP
Salisbury Square House
8 Salisbury Square
London EC4Y 8AP (GB)**

(54) **ALKALINE WATER ELECTROLYSIS APPARATUS**

(57) An alkaline water electrolysis apparatus includes: a separation membrane including a first main surface and a second main surface opposite to the first main surface; a first electrode including a third main surface and a fourth main surface opposite to the third main surface, the third main surface being provided to face the first main surface of the separation membrane; and a first bipolar plate including a fifth main surface, the fifth main surface being provided in contact with the fourth main surface of the first electrode, wherein the first electrode consists of a first metal porous body having a three-dimensional mesh structure.

FIG.1

**Description**

TECHNICAL FIELD

The present disclosure relates to an alkaline water electrolysis apparatus. The present application claims priority based on Japanese Patent Application No. 2022-138136 filed on August 31, 2022. The entire contents of the Japanese Patent Application are incorporated herein by reference.

BACKGROUND ART

For realization of carbon neutrality, hydrogen is attracting attention as a next-generation energy source. Hydrogen can be produced by alkaline water electrolysis. As an alkaline water electrolysis apparatus, there has been proposed an apparatus including an electrolytic cell partitioned into a cathode chamber and an anode chamber by a separation membrane, wherein a cathode is provided in the cathode chamber and an anode is provided in the anode chamber (PTL 1).

In PTL 1, a porous plate is used for each of the anode and the cathode, and a so-called zero gap structure is employed in which each of the cathode and the anode is in direct contact with the separation membrane in order to reduce solution resistance between the anode and the cathode. In the zero gap structure, an alkaline aqueous solution cannot pass through the separation membrane side of each electrode. Therefore, in PTL 1, a space is provided on a side opposite to the separation membrane side of the electrode in order to secure a flow path for the alkaline aqueous solution.

In recent years, from the viewpoint of carbon neutrality and energy saving, it has been required to further reduce power required to generate hydrogen in the alkaline water electrolysis apparatus. In the alkaline water electrolysis apparatus, as a surface area of an electrode is larger, electrolysis voltage is reduced to result in reduced power required to generate hydrogen.

PTL 2 proposes a technique in which a metal porous body having a three-dimensional mesh structure with a large surface area is used as an electrode of an alkaline water electrolysis apparatus.

CITATION LIST

PATENT LITERATURE

PTL 1: WO 2021/200376
PTL 2: WO 2019/163256

SUMMARY OF INVENTION

An alkaline water electrolysis apparatus according to the present disclosure comprising:

a separation membrane including a first main surface and a second main surface opposite to the first main surface;

a first electrode including a third main surface and a fourth main surface opposite to the third main surface, the third main surface being provided to face the first main surface of the separation membrane; and

a first bipolar plate including a fifth main surface, the fifth main surface being provided in contact with the fourth main surface of the first electrode, wherein the first electrode consists of a first metal porous body having a three-dimensional mesh structure.

BRIEF DESCRIPTION OF DRAWINGS

Fig. 1 is a diagram illustrating a representative exemplary configuration of an alkaline water electrolysis apparatus according to a first embodiment.

Fig. 2 is a schematic diagram of a measurement apparatus for potential oscillation data of an electrode.

Fig. 3 is a diagram showing potential oscillation data obtained by performing constant current electrolysis on a first electrode of the first embodiment.

Fig. 4 is a diagram in which a result of performing Fourier transform onto data obtained by multiplying, by a window function, potential oscillation data at each of a flow velocity of 1 m/minute and a flow velocity of 10 m/minute as shown in Fig. 3 is indicated in a coordinate system having an X axis representing a frequency (Hz) and a Y axis representing an amplitude (mV).

Fig. 5 is a cross sectional view along a line V-V in Fig. 1.

DETAILED DESCRIPTION

[Problem to be Solved by the Present Disclosure]

When the three-dimensional mesh structure of PTL 2 is applied as the electrode of the alkaline water electrolysis apparatus having the configuration of PTL 1, gas generated in the electrode remains inside the three-dimensional mesh structure and electrolysis reaction is inhibited by gas resistance to increase electrolysis voltage, with the result that power required to generate hydrogen is increased. Thus, there has been required an alkaline water electrolysis apparatus in which gas is suppressed from remaining in an electrode even when a metal porous body having a three-dimensional mesh structure is used for the electrode.

Therefore, it is an object of the present disclosure to provide an alkaline water electrolysis apparatus in which gas is suppressed from remaining in an electrode even when a metal porous body having a three-dimensional mesh structure is used for the electrode.

[Advantageous Effect of the Present Disclosure]

According to the present disclosure, it is possible to provide an alkaline water electrolysis apparatus in which gas is suppressed from remaining in an electrode even when a metal porous body having a three-dimensional mesh structure is used for the electrode.

[Description of Embodiments]

First, embodiments of the present disclosure will be listed and described.

(1) An alkaline water electrolysis apparatus according to the present disclosure includes:

a separation membrane including a first main surface and a second main surface opposite to the first main surface;
a first electrode including a third main surface and a fourth main surface opposite to the third main surface, the third main surface being provided to face the first main surface of the separation membrane; and
a first bipolar plate including a fifth main surface, the fifth main surface being provided in contact with the fourth main surface of the first electrode, wherein
the first electrode consists of a first metal porous body having a three-dimensional mesh structure.

According to the present disclosure, it is possible to provide an alkaline water electrolysis apparatus in which gas is suppressed from remaining in an electrode even when a metal porous body having a three-dimensional mesh structure is used for the electrode.
(2) In (1), preferably, the alkaline water electrolysis apparatus includes:

a second electrode including a sixth main surface and a seventh main surface opposite to the sixth main surface, the sixth main surface being provided to face the second main surface of the separation membrane; and
a second bipolar plate including an eighth main surface, the eighth main surface being provided in contact with the seventh main surface of the second electrode, wherein
the second electrode consists of a second metal porous body having a three-dimensional mesh structure.

With this, reaction sites for gas generation are increased, thereby reducing the electrolysis voltage.
(3) In (1) or (2), preferably, the third main surface of the first electrode is in a form of a square of 1 cm × 1 cm, constant current electrolysis is performed for 100 seconds at a current of 1.5 A under a condition that a gas pressure is 0.1 MPa and a flow velocity of a potassium hydroxide aqueous solution is 1 m/minute or 10 m/minute so as to obtain potential oscillation data per ms, a result of performing Fourier transform onto data obtained by multiplying the potential oscillation data by a window function is indicated in a coordinate system having an X axis representing a frequency and a Y axis representing an amplitude, and a first frequency spectrum is a frequency spectrum at the flow velocity of 1 m/minute and a second frequency spectrum is a frequency spectrum at the flow velocity of 10 m/minute,

the first frequency spectrum has a maximum peak in a range of a frequency of 0.2 Hz or more and a frequency of 10 Hz or less,
a frequency at an amplitude P1 of the maximum peak is F1 in the first frequency spectrum, and a ratio P2/P1 of an amplitude P2 of the second frequency spectrum at the frequency F1 to the amplitude P1 is 0.5 or less.

With this, the first electrode has a large specific surface area, and a time for which the gas remains in the first electrode can be further shortened by increasing the flow velocity of the alkaline aqueous solution flowing in the first electrode, thereby further reducing the electrolysis voltage.
(4) In (2), preferably, the sixth main surface of the second electrode is in a form of a square of 1 cm × 1 cm, constant current electrolysis is performed for 100 seconds at a current of 1.5 A under a condition that a gas pressure is 0.1 MPa and a flow velocity of a potassium hydroxide aqueous solution is 1 m/minute or 10 m/minute so as to obtain potential oscillation data per ms, a result of performing Fourier transform onto data obtained by multiplying the potential oscillation data by a window function is indicated in a coordinate system having an X axis representing a frequency and a Y axis representing an amplitude, and a third frequency spectrum is a frequency spectrum at the flow velocity of 1 m/minute and a fourth frequency spectrum is a frequency spectrum at the flow velocity of 10 m/minute,

the third frequency spectrum has a maximum peak in a range of a frequency of 0.2 Hz or more and a frequency of 10 Hz or less,
a frequency at an amplitude P3 of the maximum peak is F3 in the third frequency spectrum, and a ratio P4/P3 of an amplitude P4 of the fourth frequency spectrum at the frequency F3 to the amplitude P3 is 0.5 or less.

With this, the second electrode has a large specific surface area, and a time for which the gas remains in the second electrode can be further shortened by increasing the flow velocity of the alkaline aqueous solution flowing in the second electrode, thereby further reducing the electrolysis voltage.

[Details of Embodiments of the Present Disclosure]

Specific examples of the alkaline water electrolysis apparatus of the present disclosure will be described below with reference to figures. The same reference characters indicate the same or corresponding portions in the figures of the present disclosure. Further, a relation of a dimension such as a length, a width, a thickness, or a depth is modified as appropriate for clarity and brevity of the figures and does not necessarily represent an actual dimensional relation.

In the present specification, the expression "A to B" represents a range of lower to upper limits (i.e., A or more and B or less), and when no unit is indicated for A and a unit is indicated only for B, the unit of A is the same as the unit of B.

When a compound or the like is expressed by a chemical formula in the present specification and an atomic ratio is not particularly limited, it is assumed that all the conventionally known atomic ratios are included, and the atomic ratio should not be necessarily limited only to one in the stoichiometric range.

In the present disclosure, when one or more numerical values are described as each of lower and upper limits of a numerical range, a combination of any one numerical value described as the lower limit and any one numerical value described as the upper limit is also disclosed. For example, when a1 or more, b1 or more, and c1 or more are each described as the lower limit and a2 or less, b2 or less, and c2 or less are each described as the upper limit, it is assumed that a1 or more and a2 or less, a1 or more and b2 or less, a1 or more and c2 or less, b1 or more and a2 or less, b1 or more and b2 or less, b1 or more and c2 or less, c1 or more and a2 or less, c1 or more and b2 or less, and c1 or more and c2 or less are disclosed.

[First Embodiment]

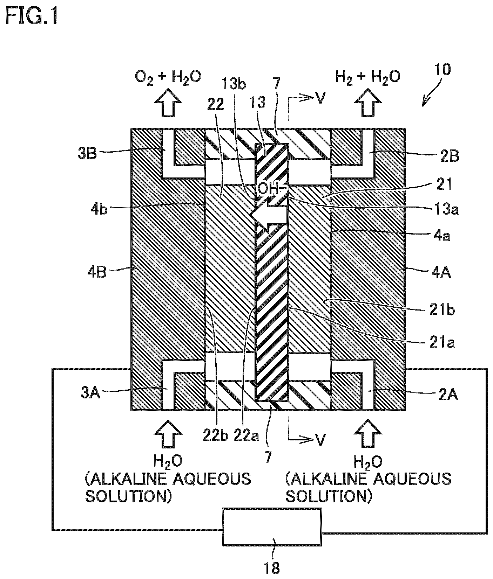

An alkaline water electrolysis apparatus according to an embodiment (hereinafter, also be referred to as "first embodiment") of the present disclosure will be described with reference to Fig. 1. The alkaline water electrolysis apparatus of the first embodiment includes: a separation membrane 13 including a first main surface 13a and a second main surface 13b opposite to first main surface 13a; a first electrode 21 including a third main surface 21a and a fourth main surface 21b opposite to third main surface 21a, the third main surface being provided to face first main surface 13a of separation membrane 13; and a first bipolar plate 4A including a fifth main surface 4a, fifth main surface 4a being provided in contact with fourth main surface 21b of first electrode 21, wherein first electrode 21 consists of a first metal porous body having a three-dimensional mesh structure.

The alkaline water electrolysis apparatus of Fig. 1 further includes: a second electrode 22 including a sixth main surface 22a and a seventh main surface 22b opposite to sixth main surface 22a, sixth main surface 22a being provided to face second main surface 13b of the separation membrane; and a second bipolar plate 4B including an eighth main surface 4b, eighth main surface 4b being provided in contact with seventh main surface 22b of second electrode 22. Second electrode 22 consists of a second metal porous body having a three-dimensional mesh structure.

Fig. 1 shows a case where each of both first electrode 21 and second electrode 22 consists of the metal porous body having the three-dimensional mesh structure; however, in the first embodiment, at least first electrode 21 may consist of the metal porous body having the three-dimensional mesh structure, and second electrode 22 may not be the metal porous body having the three-dimensional mesh structure. For example, second electrode 22 may be a porous plate such as a metal mesh or a punching metal. Preferably, each of both first electrode 21 and second electrode 22 consists of the metal porous body having the three-dimensional mesh structure because electrolysis voltage is reduced to result in reduced power required to generate hydrogen and oxygen.

The alkaline water electrolysis apparatus has a gasket 7 that is sandwiched between first bipolar plate 4A and second bipolar plate 4B and that holds separation membrane 13. Each of first bipolar plate 4A and second bipolar plate 4B is connected to a power supply 18. First electrode 21 is provided in a first space surrounded by first main surface 13a of separation membrane 13, fifth main surface 4a of first bipolar plate 4A, and the inner wall of gasket 7. Second electrode 22 is provided in a space surrounded by second main surface 13b of separation membrane 13, eighth main surface 4b of second bipolar plate 4B, and the inner wall of gasket 7.

The following describes a case where first electrode 21 is a cathode and second electrode 22 is an anode; however, first electrode 21 may be an anode and second electrode 22 may be a cathode.

First bipolar plate 4A is provided with: a first alkaline aqueous solution supply flow path 2A for supplying an alkaline aqueous solution into the first space; and a first alkaline aqueous solution collection flow path 2B for collecting hydrogen generated in first electrode 21 and the alkaline aqueous solution. The alkaline aqueous solution supplied from first alkaline aqueous solution supply flow path 2A passes through inside of first electrode 21 via communication pores of the metal porous body having the three-dimensional mesh structure and constituting first electrode 21, and reaches and is collected in first alkaline aqueous solution collection flow path 2B. When the alkaline aqueous solution passes through first electrode 21, hydrogen is generated inside first electrode 21. The hydrogen is pushed by liquid flow of the alkaline aqueous solution, is moved to outside of first electrode 21, and reaches and is collected in first alkaline aqueous solution collection flow path 2B together with the alkaline aqueous solution.

Since fourth main surface 21b of first electrode 21 and fifth main surface 4a of first bipolar plate 4A are in contact with each other in the first embodiment, substantially a whole of the alkaline aqueous solution supplied from first alkaline aqueous solution supply flow path 2A passes through first electrode 21 and reaches first alkaline aqueous solution collection flow path 2B. Therefore, the gas (hydrogen gas) generated inside first electrode 21 can be effectively pushed out to the downstream side of the liquid flow, i.e., to the outside of first electrode 21 on the alkaline aqueous solution collection flow path side by the liquid flow of the alkaline aqueous solution passing through first electrode 21, thereby suppressing the gas from remaining in the first electrode.

In Fig. 1, first alkaline aqueous solution supply flow path 2A and first alkaline aqueous solution collection flow path 2B are provided in first bipolar plate 4A; however, the positions of first alkaline aqueous solution supply flow path 2A and first alkaline aqueous solution collection flow path 2B are not particularly limited as long as the alkaline aqueous solution can pass through the inside of first electrode 21. For example, first alkaline aqueous solution supply flow path 2A and first alkaline aqueous solution collection flow path 2B may be provided in gasket 7.

Second bipolar plate 4B is provided with: a second alkaline aqueous solution supply flow path 3A for supplying the alkaline aqueous solution into the second space; and a second alkaline aqueous solution collection flow path 3B for collecting oxygen generated in second electrode 22 and the alkaline aqueous solution. The alkaline aqueous solution supplied from second alkaline aqueous solution supply flow path 3A passes through inside of second electrode 22 via communication pores of the metal porous body having the three-dimensional mesh structure and constituting second electrode 22, and reaches and is collected in second alkaline aqueous solution collection flow path 3B. When the alkaline aqueous solution passes through second electrode 22, oxygen is generated inside second electrode 22. The oxygen is pushed by liquid flow of the alkaline aqueous solution, is moved to outside of second electrode 22, and reaches and is collected in second alkaline aqueous solution collection flow path 3B together with the alkaline aqueous solution.

Since seventh main surface 22b of second electrode 22 and eighth main surface 4b of second bipolar plate 4B are in contact with each other in the first embodiment, substantially a whole of the alkaline aqueous solution supplied from second alkaline aqueous solution supply flow path 3A passes through second electrode 22 and reaches second alkaline aqueous solution collection flow path 3B. Therefore, the gas (oxygen gas) generated inside second electrode 22 can be effectively pushed out to the downstream side of the liquid flow, i.e., to the outside of second electrode 22 on the alkaline aqueous solution collection flow path side by the liquid flow of the alkaline aqueous solution passing through second electrode 22, thereby suppressing the gas from remaining in the second electrode. Bubbles of the oxygen gas generated in the electrode consisting of the porous body tend to be larger than bubbles of the hydrogen gas formed under the same conditions and tend to be likely to remain in the electrode. Therefore, it is presumed that the effect of pushing the gas by the liquid flow of the alkaline aqueous solution and the effect of suppressing the gas from remaining therein can be likely to be obtained particularly on the anode side on which the oxygen gas is generated.

In Fig. 1, second alkaline aqueous solution supply flow path 3A and second alkaline aqueous solution collection flow path 3B are provided in second bipolar plate 4B; however, the positions of second alkaline aqueous solution supply flow path 3A and second alkaline aqueous solution collection flow path 3B are not particularly limited as long as the alkaline aqueous solution can pass through the inside of second electrode 22. For example, second alkaline aqueous solution supply flow path 3A and second alkaline aqueous solution collection flow path 3B may be provided in gasket 7.

A known material can be used for separation membrane 13. The material of separation membrane 13 is not particularly limited as long as it has wettability, ion permeability, alkaline resistance, non-conductivity, non-air permeability, thermal stability, and the like. Examples of the material of such a separation membrane 13 include fluororesin impregnated with potassium titanate, polyantimonic acid, polysulfone, hydrophilic polyphenylene sulfide, polyvinylidene fluoride, polytetrafluoroethylene, and Zirfon Perl UTP 500 provided by AGFA.

First electrode 21 consists of the first metal porous body having the three-dimensional mesh structure. In the present embodiment, the "three-dimensional mesh structure" means a structure in which a solid component (for example, a metal or the like) of the first metal porous body is expanded three-dimensionally in the form of a mesh. Since the first metal porous body has such a three-dimensional mesh structure, the first metal porous body has the communication pores. Therefore, the alkaline aqueous solution can pass through first electrode 21 consisting of the first metal porous body via the communication pores.

The first metal porous body can consist of: a framework composed of a metal or alloy having the three-dimensional mesh structure; and a coating layer including a metal and provided on the framework. Examples of the metal or alloy of the framework include: metals as simple substances such as nickel (Ni), iron (Fe), titanium (Ti), chromium (Cr), and cobalt (Co); alloys of these metals; and various types of stainless steels. Nickel, which has a wide stable potential range in alkali, is particularly preferable. Examples of the material of the coating layer include: metals as simple substances such as nickel (Ni), iron (Fe), titanium (Ti), chromium (Cr), and cobalt (Co); alloys of these metals; and various types of stainless steels.

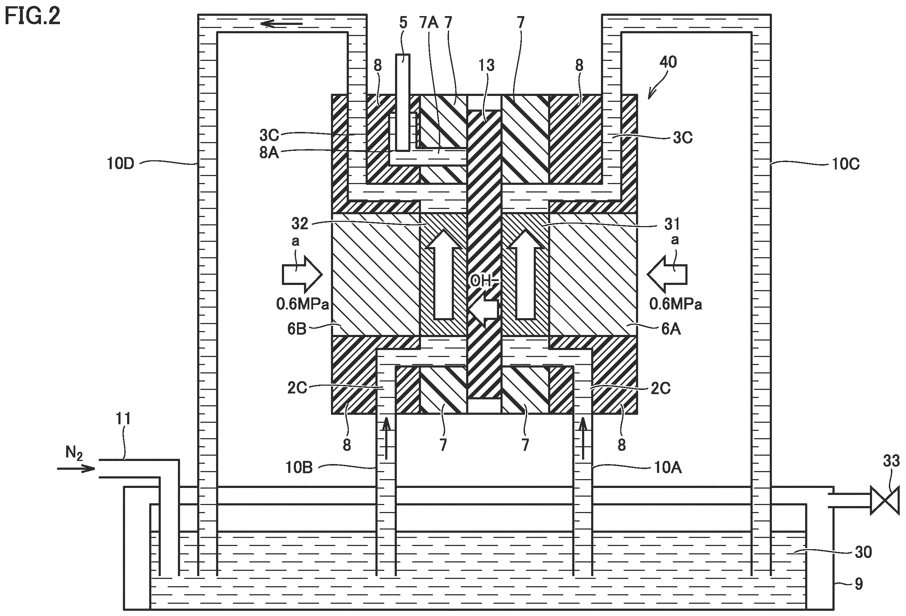

Preferably, third main surface 21a of first electrode 21 is in the form of a square of 1 cm × 1 cm, constant current electrolysis is performed for 100 seconds at a current of 1.5 A under a condition that a gas pressure is 0.1 MPa and a flow velocity of a potassium hydroxide aqueous solution is 1 m/minute or 10 m/minute so as to obtain potential oscillation data per ms, a result of performing Fourier transform onto data obtained by multiplying the potential oscillation data by a window function is indicated in a coordinate system having an X axis representing a frequency and a Y axis representing an amplitude, a first frequency spectrum is a frequency spectrum at the flow velocity of 1 m/minute and a second frequency spectrum is a frequency spectrum at the flow velocity of 10 m/minute, the first frequency spectrum has a maximum peak in a range of a frequency of 0.2 Hz or more and a frequency of 10 Hz or less, a frequency at an amplitude P1 of the maximum peak is F1 in the first frequency spectrum, and a ratio P2/P1 of an amplitude P2 of the second frequency spectrum at frequency F1 to amplitude P1 is 0.5 or less. This configuration will be specifically described with reference to Figs. 2 to 4.

Fig. 2 is a schematic diagram of a measurement apparatus for the potential oscillation data. The measurement apparatus for the potential oscillation data includes an alkaline water electrolytic cell 40, a pressure vessel 9, and circulation paths 10A, 10B, 10C, 10D for circulating alkaline water between alkaline water electrolytic cell 40 and pressure vessel 9.

Alkaline water electrolytic cell 40 includes separation membrane 13, a cathode 31 provided on one main surface of separation membrane 13, an anode 32 provided on a main surface of separation membrane 13 opposite to the foregoing main surface on which cathode 31 is provided, and a cathode-side current collecting member 6A and an anode-side current collecting member 6B provided on the respective main surface sides of cathode 31 and anode 32 opposite to separation membrane 13. When obtaining the below-described potential oscillation data, the first electrode, which is a target for the measurement, is used as each of anode 32 and cathode 31. Each of anode-side current collecting member 6B and cathode-side current collecting member 6A is pressed to the separation membrane 13 side at a pressure of 0.6 MPa, thus resulting in a zero gap structure in which separation membrane 13 is in contact with each of anode 32 and cathode 31. Further, the main surfaces of anode 32 and anode-side current collecting member 6B are in contact with each other, and the main surfaces of cathode 31 and cathode-side current collecting member 6A are in contact with each other. Separation membrane 13 is held by gasket 7.

A flow path frame 8 composed of a resin is provided around each of anode-side current collecting member 6B and cathode-side current collecting member 6A. Flow path frame 8 is provided with: an alkaline aqueous solution supply flow path 2C for supplying cathode 31 or anode 32 with the alkaline aqueous solution stored in a water tank in pressure vessel 9; and an alkaline aqueous solution collection flow path 3C for collecting gas (oxygen or hydrogen) generated in anode 32 or cathode 31 and the alkaline aqueous solution. In gasket 7 on the anode 32 side and the alkaline aqueous solution collection flow path 3C side, a through-flow path 7A connecting a surface of the separation membrane and flow path frame 8 is formed, and an inner space 8A communicating with the through-flow path is formed in flow path frame 8. A reference electrode 5 is inserted in inner space 8A. The alkaline aqueous solution is introduced in inner space 8A through separation membrane 13. When obtaining the below-described potential oscillation data, a potential between reference electrode 5 and anode-side current collecting member 6B is measured.

The material of each of the current collecting members is not particularly limited as long as it is a conductive material having alkaline resistance. For example, nickel can be used. The material of flow path frame 8 is not particularly limited as long as it is an insulator material having alkaline resistance. For example, polypropylene or polyetheretherketone (PEEK) can be used. A potassium hydroxide aqueous solution (concentration of 7 mol/L) at 30°C is used as the alkaline aqueous solution. As the reference electrode, a Ag/AgCl reference electrode (RE-11A provided by E.C. Frontier with its internal solution being saturated KCL) is used.

The water tank is provided inside pressure vessel 9, and alkaline aqueous solution 30 is stored in the water tank. Alkaline aqueous solution 30 in the water tank is pumped up by a pump (not shown) provided at each of first circulation path 10A and second circulation path 10B, and is supplied to alkaline water electrolytic cell 40 through first circulation path 10A and second circulation path 10B. By adjusting an output of the pump, a flow rate of the alkaline aqueous solution to be supplied to alkaline water electrolytic cell 40 can be adjusted.

The alkaline aqueous solution collected from alkaline water electrolytic cell 40 is returned to the water tank through third circulation path 10C and fourth circulation path 10D. Pressure vessel 9 is provided with a nitrogen gas introduction port and a valve 33, and gas pressure in pressure vessel 9 can be adjusted. When obtaining the below-described potential oscillation data, the gas pressure in pressure vessel 9 is maintained at 0.1 MPa.

The first electrode is cut out such that third main surface 21a is in the form of a square of 1 cm × 1 cm, thereby obtaining a measurement sample. Two measurement samples are prepared. When the size of the third main surface of the first electrode is smaller than the square of 1 cm × 1 cm, a plurality of first electrodes are arranged such that their third main surfaces are contiguous, thereby securing the size of 1 cm × 1 cm. Fourth main surface 21b also has the same size as the size of the third main surface. The thickness of each measurement sample in a normal direction of the third main surface is not particularly limited, and may be, for example, 0.3 mm to 2.2 mm. The measurement samples are disposed at the positions of anode 32 and cathode 31 in Fig. 2. On this occasion, each of the measurement samples is disposed such that the third main surface is in contact with separation membrane 13 and fourth main surface 21b is in contact with the current collecting member.

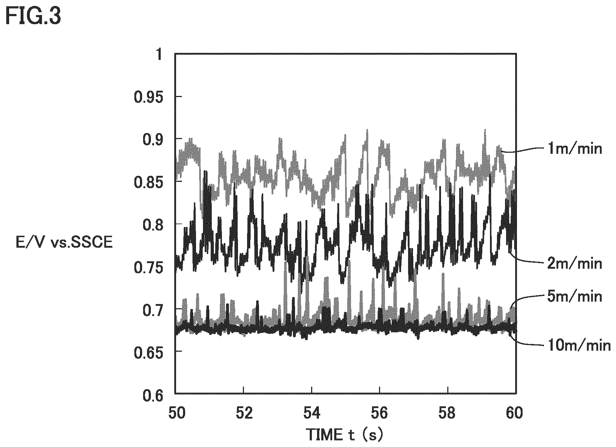

The flow velocity of the potassium hydroxide aqueous solution is maintained at 1 m/minute or 10 m/minute by the pump in a state in which the gas pressure in pressure vessel 9 is maintained at 0.1 MPa, and constant current electrolysis is performed at a current of 1.5 A for 100 seconds, thereby obtaining the potential oscillation data per ms. The flow velocity is found by dividing the flow rate by the cross sectional area of the electrode (the width of 1 cm × the thickness in the normal direction of the third main surface). Here, the cross sectional area of the electrode is a cross sectional area obtained by cutting the electrode along a plane including the normal direction of the third main surface. The cross sectional area corresponds to a cross sectional area obtained by cutting the electrode along a plane normal to the flow of the alkaline aqueous solution. The flow velocity is adjusted by controlling the flow rate. A position at which the flow rate is measured is first circulation path 10A. Fig. 3 is an exemplary graph showing the potential oscillation data obtained by performing the constant current electrolysis on the first electrode of the first embodiment under the above-described conditions. The first electrode consists of the metal porous body having the three-dimensional mesh structure composed of nickel and has an average pore diameter of 0.45 nm.

In the graph of Fig. 3, the X axis represents time t (unit: second (s)) from start of the constant current electrolysis, and the Y axis represents E/V vs. SSCE, which is potential based on reference electrode SSCE (Ag/AgCl reference electrode). For the sake of reference, the graph of Fig. 3 also shows data in the case where the flow velocity of the potassium hydroxide aqueous solution is 2 m/minute (indicated as 2 m/min in Fig. 3) and data in the case where the flow velocity of the potassium hydroxide aqueous solution is 5 m/minute (indicated as 5 m/min in Fig. 3) in addition to the data in the case where the flow velocity of the potassium hydroxide aqueous solution is 1 m/minute (indicated as 1 m/min in Fig. 3), and the data in the case were the flow velocity of the potassium hydroxide aqueous solution is 10 m/minute (indicated as 10 m/min in Fig. 3). In view of Fig. 3, it is confirmed that the behavior of a change in potential greatly differs depending on the flow velocity of the potassium hydroxide aqueous solution.

Next, the result of performing Fourier transform onto the data obtained by multiplying, by the window function, the potential oscillation data at each of the flow velocity of 1 m/minute and the flow velocity of 10 m/minute as obtained above is indicated in the coordinate system having the X axis representing the frequency and the Y axis representing the amplitude. Thus, the first frequency spectrum at the flow velocity of 1 m/minute and the second frequency spectrum at the flow velocity of 10 m/minute are obtained. Here, a Hann window represented by the following formula is used as the window function:

$$h(n) = 0.5 - 0.5\cos(2\pi n/N) \ (0 \leq n < N)$$

In the present analysis, n=t and N=100 are satisfied with respect to time t (s) (because the data is for 100 seconds).

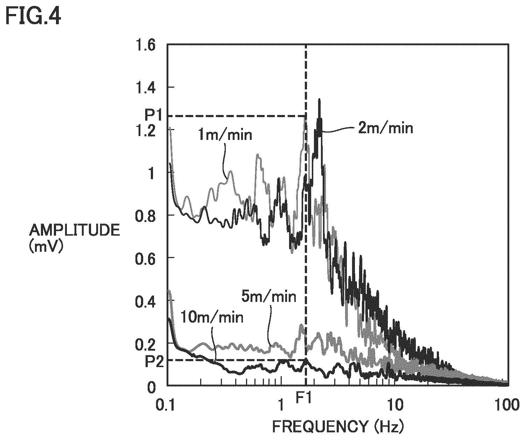

Fig. 4 shows that the result of performing Fourier transform onto the data obtained by multiplying, by the window function, the potential oscillation data at each of the flow velocity of 1 m/minute and the flow velocity of 10 m/minute as shown in Fig. 3 is indicated in the coordinate system having the X axis representing the frequency (unit: Hz) and the Y axis representing the amplitude (unit: mV). For the sake of reference, Fig. 4 also shows a frequency spectrum (indicated as 2 m/min in Fig. 4) at the flow velocity of 2 m/minute and a frequency spectrum (indicated as 5 m/min in Fig. 4) at the flow velocity of 5 m/minute in addition to the first frequency spectrum (indicated as 1 m/min in Fig. 4) at the flow velocity of 1 m/minute and the second frequency spectrum (indicated as 10 m/min in Fig. 4) at the flow velocity of 10 m/minute. In view of Fig. 4, it is confirmed that as the flow velocity of the potassium hydroxide aqueous solution is increased, the amplitude is decreased to result in a broad peak and the peak is moved to the high-frequency side.

When the gas generated in the electrode remains in the electrode, the electrolysis voltage is increased due to gas resistance. When the gas is released from the electrode, the electrolysis voltage is decreased because there is no gas resistance. As a time for which the gas remains in the electrode is longer, an amount of increase of the electrolysis voltage is larger and an amount of decrease of the electrolysis voltage when the gas is released is also larger. In this case, the amplitude of the frequency spectrum shown in Fig. 4 is large. On the other hand, as the time for which the gas remains in the electrode is shorter, the amount of increase of the electrolysis voltage is smaller and the amount of decrease of the electrolysis voltage when the gas is released is also smaller. In this case, the amplitude of the frequency spectrum shown in Fig. 4 is small. In the frequency spectrum shown in Fig. 4, as the flow velocity of the potassium hydroxide aqueous solution is larger, the amplitude is smaller. This indicates that as the flow velocity of the potassium hydroxide aqueous solution is larger, the time for which the gas remains in the electrode is longer and the gas is quickly released in a state of small bubbles from the electrode.

The first frequency spectrum preferably has a maximum peak P1 in a range of a frequency of 0.2 Hz or more and a frequency of 10 Hz or less. The fact that the first frequency spectrum has the maximum peak in the range of a frequency of 0.2 Hz or more and a frequency of 10 Hz or less means that the specific surface area of the metal porous body having the three-dimensional mesh structure and constituting the first electrode is large and the gas is therefore less likely to be released therefrom. In the first frequency spectrum, the range of the frequency at which the maximum peak exists is preferably 0.2 Hz or more and 10 Hz or less, is more preferably 0.3 Hz or more and 8 Hz or less, and is further preferably 0.4 Hz or more and 6 Hz or less. Maximum peak P1 is preferably 0.2 mV or more and 5 mV or less, is more preferably 0.3 mV or more and 4 mV or less, and is further preferably 0.4 mV or more and 3 mV or less, for example.

A frequency at amplitude P1 of the maximum peak is F1 in the first frequency spectrum, and a ratio P2/P1 of an amplitude P2 of the second frequency spectrum at frequency F1 to amplitude P1 is preferably 0.5 or less. P2/P1 of 0.5 or less means that the time for which the gas remains in the first electrode is shortened by increasing the flow velocity of the potassium hydroxide aqueous solution flowing in the first electrode, thereby reducing the electrolysis voltage. The upper limit of P2/P1 is preferably 0.5 or less, is more preferably 0.4 or less, and is further preferably 0.35 or less from the viewpoint of reducing the time for which the gas remains in the first electrode and reducing the electrolysis voltage. The lower limit of P2/P1 is not particularly limited, and may be, for example, 0.05 or more. P2/P1 is preferably 0.05 or more and 0.5 or less, is more preferably 0.05 or more and 0.4 or less, and is further preferably 0.05 or more and 0.35 or less.

Second electrode 22 consists of a second metal porous body having a three-dimensional mesh structure. The second metal porous body can employ the configuration described for the first metal porous body. The first metal porous body and the second metal porous body may be the same or different from each other.

Preferably, the sixth main surface of the second electrode is in the form of a square of 1 cm × 1 cm, constant current electrolysis is performed for 100 seconds at a current of 1.5 A under a condition that a gas pressure is 0.1 MPa and a flow velocity of a potassium hydroxide aqueous solution is 1 m/minute or 10 m/minute so as to obtain potential oscillation data per ms, a result of performing Fourier transform onto data obtained by multiplying the potential oscillation data by a window function is indicated in a coordinate system having an X axis representing a frequency and a Y axis representing an amplitude, a third frequency spectrum is a frequency spectrum at the flow velocity of 1 m/minute and a fourth frequency spectrum is a frequency spectrum at the flow velocity of 10 m/minute, the third frequency spectrum has a maximum peak in a range of a frequency of 0.2 Hz or more and a frequency of 10 Hz or less, a frequency at an amplitude P3 of the maximum peak is F3 in the third frequency spectrum, and a ratio P4/P3 of an amplitude P4 of the fourth frequency spectrum at frequency F3 to amplitude P3 is 0.5 or less. The second electrode has a large specific surface area, and a time for which the gas remains in the second electrode is shortened by increasing the flow velocity of the potassium hydroxide aqueous solution flowing in the second electrode, thereby reducing the electrolysis voltage.

Each of the third frequency spectrum and the fourth frequency spectrum can be obtained under the same measurement conditions by using the same measurement apparatus as that for each of the first frequency spectrum and the second frequency spectrum of the first electrode and by setting the second electrode as a target for measurement.

Each of the first metal porous body and the second metal porous body (hereinafter, the first metal porous body and the second metal porous body are also collectively referred to as "metal porous body") can be produced, for example, by the following method.

First, a resin-molded body having the three-dimensional mesh structure (hereinafter, also simply referred to as "resin-molded body") is prepared. As the resin-molded body, a polyurethane resin, a melamine resin, or the like can be used. Then, a conductive layer is formed on a surface of the resin-molded body. For example, a conductive coating material containing conductive particles such as carbon or conductive ceramic is applied, a layer of a conductive metal such as nickel or copper is formed by an electroless plating method, or a layer of a conductive metal is formed by a vapor deposition method or a sputtering method. Then, the resin-molded body having the conductive layer formed on its surface is used as a substrate, and a metal layer is formed on the substrate by electroplating. The electroplating method can be performed in accordance with a known method.

Next, the resin-molded body used as the substrate is removed by heat treatment or the like. Thus, a framework having the three-dimensional mesh structure can be obtained. The average pore diameter of the framework is substantially equal to the average pore diameter of the resin-molded body used as the substrate. Therefore, the average pore diameter of the resin-molded body may be appropriately selected in accordance with the average pore diameter of the framework to be produced. Since the porosity of the framework is determined by a final amount of the metal, an amount of attachment of the metal by plating or the like may be appropriately selected in accordance with the porosity of the framework to be produced. The porosity and average pore diameter of the resin-molded body are defined in the same manner as the porosity and average pore diameter of the metal porous body described above.

Next, a coating layer is formed on the framework so as to obtain the metal porous body. A method of forming the coating layer is not particularly limited as long as the coating layer can be uniformly formed on the framework. For example, the coating layer can be formed by a plating method. As the plating method, an electroplating method is preferable. The electroplating method can be performed by a known method.

The lower limit of the porosity of each of the first metal porous body and the second metal porous body is preferably 70% or more, is more preferably 80% or more, and is further preferably 85% or more from the viewpoint of ease of release of the gas and ease of flow of the alkaline aqueous solution. The upper limit of the porosity of each of the first metal porous body and the second metal porous body is preferably 99.5% or less, is more preferably 99.2% or less, and is further preferably 99% or less from the viewpoint of strength. The porosity of each of the first metal porous body and the second metal porous body is preferably 70% or more and 99.5% or less, is more preferably 80% or more and 99.2% or less, and is further preferably 85% or more and 99% or less.

The porosity of the metal porous body is defined by the following formula:

$$Porosity\ (\%) = [1-\{Mp/(Vp \times dp)\}] \times 100$$

Mp: mass [g] of the metal porous body
Vp: volume [cm$^3$] of the shape of the external appearance in the metal porous body
Dp: density [g/cm$^3$] of the metal of the metal porous body

The lower limit of the average pore diameter of each of the first metal porous body and the second metal porous body is preferably 100 $\mu$m or more, is more preferably 200 $\mu$m or more, and is further preferably 300 $\mu$m or more from the viewpoint of ease of flow of the alkaline aqueous solution. The upper limit of the average pore diameter of each of the first metal porous body and the second metal porous body is preferably 2000 $\mu$m or less, is more preferably 1500 $\mu$m or less, and is further preferably 1000 $\mu$m or less from the viewpoint of increasing the specific surface area. The average pore diameter of each of the first metal porous body and the second metal porous body is preferably 100 $\mu$m or more and 2000 $\mu$m or less, is more preferably 200 $\mu$m or more and 1500 $\mu$m or less, and is further preferably 300 $\mu$m or more and 1000 $\mu$m or less.

The average pore diameter of the metal porous body is defined as one found by the following formula:

$$Average\ pore\ diameter\ (\mu m) = 25400\ \mu m/nc,$$

where
nc represents the average number of cell portions per inch (25.4 mm = 25400 $\mu$m) as found by observing at least 10 visual fields in the surface of the metal porous body using a microscope or the like.

An area S1 of third main surface 21a of first electrode 21 is preferably 25% or more of an area S2 of a region surrounded by an outer edge of gasket 7. With this, an amount of generation of hydrogen can be large while suppressing the size of the alkaline water electrolysis apparatus to be small.

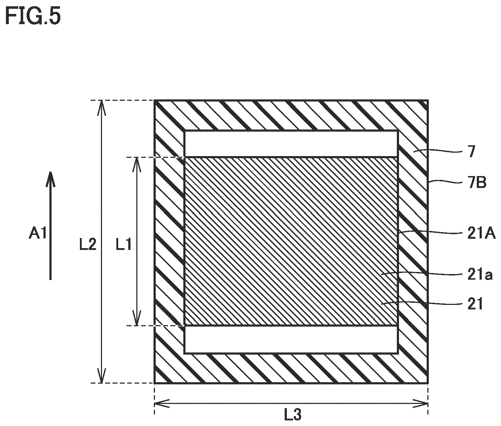

Area S1 and area S2 in the present disclosure will be described with reference to Fig. 5. Fig. 5 is a cross sectional view on the first electrode 21 side as obtained by cutting the alkaline water electrolysis apparatus shown in Fig. 1 along a line V-V. In the present disclosure, area S1 means an area of a region surrounded by outer edge 21A of third main surface 21a. Since first electrode 21 consists of the metal porous body having the three-dimensional mesh structure, third main surface 21a is provided with a plurality of openings when viewed microscopically. Area S1 corresponds to an area of a region including both the solid portion of the metal porous body and the openings defined by the solid portion. In the present disclosure, area S2 means a region surrounded by outer edge 7B of gasket 7 in a cross section obtained by cutting gasket 7 along a plane parallel to third main surface 21a of first electrode 21. Gasket 7 is provided with holes for installing separation membrane 13 and the electrodes. Area S2 corresponds to an area of a region including both the holes and the main body portion of gasket 7 defining the holes.

A length L1 of first electrode 21 along a flow direction of the alkaline aqueous solution is preferably 25% or more of a length L2 of gasket 7 along the flow direction of the alkaline aqueous solution. With this, the amount of generation of hydrogen can be increased while suppressing the size of the alkaline water electrolysis apparatus to be small.

As shown in Fig. 5, in the present disclosure, length L1 means the maximum length of third main surface 21a of first electrode 21 along a flow direction A1 of the alkaline aqueous solution. In the present disclosure, length L2 means a maximum value of a distance between two points at each of which a straight line along flow direction A1 of the alkaline aqueous solution intersects outer edge 7B of gasket 7 when the straight line is drawn in a cross section obtained by cutting gasket 7 along a plane parallel to third main surface 21a of first electrode 21.

Although the relation between the sizes of first electrode 21 and gasket 7 has been described above, a relation between the sizes of second electrode 22 and gasket 7 can be the same as the relation between the sizes of first electrode 21 and gasket 7. That is, an area S3 of sixth main surface 22a of second electrode 22 is preferably 25% or more of area S2 of the region surrounded by the outer edge of gasket 7. A length L3 of second electrode 22 along the flow direction of the alkaline aqueous solution is preferably 25% or more of length L2 of gasket 7 along the flow direction of the alkaline aqueous solution.

In the cross section obtained by cutting gasket 7 along the plane parallel to third main surface 21a of first electrode 21, length L2 of gasket 7 along flow direction A1 of the alkaline aqueous solution is preferably twice or less as large as length L3 of gasket 7 in the direction perpendicular to flow direction A1 of the alkaline aqueous solution. With this, the effect of pushing out the gas in the entire electrode and the effect of suppressing the gas from remaining in the electrode are improved while suppressing pressure loss during sending of the liquid.

As shown in Fig. 5, in the present disclosure, length L2 means a maximum value of a distance between two points at each of which a straight line along the flow direction of the alkaline aqueous solution intersects the outer edge of gasket 7 when the straight line is drawn in the cross section obtained by cutting gasket 7 along the plane parallel to third main surface 21a of first electrode 21. In the present disclosure, length L3 means a maximum value of a distance between two points at each of which a straight line perpendicular to the flow direction of the alkaline aqueous solution intersects outer edge 7B of gasket 7 when the straight line is drawn in the cross section obtained by cutting gasket 7 along the plane parallel to third main surface 21a of first electrode 21.

In first electrode 21, the pressure loss is preferably 1 atm or less when water at 20°C passes through the electrode in the normal direction of third main surface 21a at a flow velocity of 3 m/second. With this, a necessary capacity of the liquid sending pump is decreased, thereby reducing facility cost. The pressure loss is measured in the following manner: an electrode sample of 80 mm square is prepared, water is sent by the pump so as to pass through the electrode sample in the normal direction of third main surface 21a, the rear side of the electrode sample is in an open state, and the pressure of the water before passing through the electrode sample is measured by a pressure sensor.

In the first embodiment, fourth main surface 21b of first electrode 21 and fifth main surface 4a of the bipolar plate are provided in contact with each other; however, fourth main surface 21b of first electrode 21 and fifth main surface 4a of the bipolar plate may be electrically connected to each other with an elastic body being interposed therebetween. In this case, the alkaline aqueous solution may pass through the elastic body depending on the material and shape of the elastic body. Therefore, in order to reduce the amount of the alkaline aqueous solution passing through the elastic body as much as possible and increase the amount of the alkaline aqueous solution passing through first electrode 21, the elastic body is preferably composed of a material through which the alkaline aqueous solution does not pass or is less likely to pass and which has a small thickness. Examples of such a material include a Ni mattress. The thickness of the elastic body may be, for example, 0.5 mm to 2 mm.

An implementation of the alkaline water electrolysis apparatus including the elastic body can be defined as follows.

An alkaline water electrolysis apparatus comprising:

a separation membrane including a first main surface and a second main surface opposite to the first main surface;
a first electrode including a third main surface and a fourth main surface opposite to the third main surface, the third main surface being provided to face the first main surface of the separation membrane;
a first bipolar plate including a fifth main surface, the fifth main surface being provided to face the fourth main surface of the first electrode; and
an elastic body provided between the first electrode and the first bipolar plate in contact with each of the first electrode and the first bipolar plate, wherein the first electrode consists of a first metal porous body having a three-dimensional mesh structure.

Examples

The present embodiment will be described more specifically with reference to examples. It should be noted that the present embodiment is not limited by these examples.

[Example 1]

In an Example 1, an alkaline water electrolysis apparatus having the configuration shown in Fig. 1 was produced. As each of first electrode 21 and second electrode 22, a metal porous body (material: nickel; average pore diameter: 0.45 nm; area of the third main surface: 250 mm$^2$; thickness in the normal direction of the third main surface: 1 mm) having a three-dimensional mesh structure having the first frequency spectrum and the second frequency spectrum shown in Fig. 4 was used. An electrolysis voltage was evaluated using the alkaline water electrolysis apparatus of Example 1. Specifically, 7 mol/L of a KOH aqueous solution was supplied to each of first electrode 21 and second electrode 22 at a flow velocity of 10 m/min, electrolysis was performed at a liquid temperature of 30°C and a current value of 37.5 A, and an average of voltages during a period of time of 90 seconds to 100 seconds from the start of the electrolysis was found. The result was 2.47 V.

[Comparative Example 1]

In a Comparative Example 1, an alkaline water electrolysis apparatus having the configuration shown in Fig. 1 was produced. As each of first electrode 21 and second electrode 22, a metal porous body having a three-dimensional mesh structure in which P2/P1 is more than 0.5 in the first frequency spectrum and the second frequency spectrum was used. An electrolysis voltage was evaluated using the alkaline water electrolysis apparatus of Comparative Example 1. A specific method therefor is the same as that in Example 1. The result was 2.68 V.

Although the embodiments and examples of the present disclosure have been described as described above, it is also initially expected to appropriately combine or variously modify the configurations of the above-described embodiments and examples.

The embodiments and examples disclosed herein are illustrative and non-restrictive in any respect. The scope of the present invention is defined by the terms of the claims, rather than the embodiments and examples described above, and is intended to include any modifications within the scope and meaning equivalent to the terms of the claims.

REFERENCE SIGNS LIST

2A: first alkaline aqueous solution supply flow path; 2B: first alkaline aqueous solution collection flow path; 2C: alkaline aqueous solution supply flow path; 3A: second alkaline aqueous solution supply flow path; 3B: second alkaline aqueous solution collection flow path; 3C: alkaline aqueous solution collection flow path; 4A: first bipolar plate; 4a: fifth main surface; 4B: second bipolar plate; 4b: eighth main surface; 5: reference electrode; 6A: cathode-side current collecting member; 6B: anode-side current collecting member, 7: gasket; 7A: through-flow path; 7B: outer edge of gasket; 8: flow path frame; 8A: inner space; 9: pressure vessel; 10A: first circulation path; 10B: second circulation path; 10C: third circulation path; 10D: fourth circulation path; 11: nitrogen gas introduction port; 13: separation membrane; 13a: first main surface; 13b: second main surface; 18: power supply; 21: first electrode; 21a: third main surface; 21b: fourth main surface; 21A: outer edge of third main surface; 22: second electrode; 22a: sixth main surface; 22b: seventh main surface; 30: alkaline aqueous solution; 31: cathode; 32: anode; 33: valve; 40: alkaline water electrolytic cell

**Claims**

1. An alkaline water electrolysis apparatus comprising:

   a separation membrane including a first main surface and a second main surface opposite to the first main surface;
   a first electrode including a third main surface and a fourth main surface opposite to the third main surface, the third main surface being provided to face the first main surface of the separation membrane; and
   a first bipolar plate including a fifth main surface, the fifth main surface being provided in contact with the fourth main surface of the first electrode,
   wherein
   the first electrode consists of a first metal porous body having a three-dimensional mesh structure.

2. The alkaline water electrolysis apparatus according to claim 1, comprising:

   a second electrode including a sixth main surface and a seventh main surface opposite to the sixth main surface, the sixth main surface being provided to face the second main surface of the separation membrane; and
   a second bipolar plate including an eighth main surface, the eighth main surface being provided in contact with the seventh main surface of the second electrode,
   wherein
   the second electrode consists of a second metal porous body having a three-dimensional mesh structure.

3. The alkaline water electrolysis apparatus according to claim 1 or 2, wherein

   the third main surface of the first electrode is in a form of a square of 1 cm × 1 cm, constant current electrolysis is performed for 100 seconds at a current of 1.5 A under a condition that a gas pressure is 0.1 MPa and a flow velocity of a potassium hydroxide aqueous solution is 1 m/minute or 10 m/minute so as to obtain potential oscillation data per ms, a result of performing Fourier transform onto data obtained by multiplying the potential oscillation data by a window function is indicated in a coordinate system having an X axis representing a frequency and a Y axis representing an amplitude, and a first frequency spectrum is a frequency spectrum at the flow velocity of 1 m/minute and a second frequency spectrum is a frequency spectrum at the flow velocity of 10 m/minute,
   the first frequency spectrum has a maximum peak in a range of a frequency of 0.2 Hz or more and a frequency of 10 Hz or less,
   a frequency at an amplitude P1 of the maximum peak is F1 in the first frequency spectrum, and
   a ratio P2/P1 of an amplitude P2 of the second frequency spectrum at the frequency F1 to the amplitude P1 is 0.5 or less.

4. The alkaline water electrolysis apparatus according to claim 2,
   wherein

   the sixth main surface of the second electrode is in a form of a square of 1 cm × 1 cm, constant current electrolysis is performed for 100 seconds at a current of 1.5 A under a condition that a gas pressure is 0.1 MPa and a flow velocity of a potassium hydroxide aqueous solution is 1 m/minute or 10 m/minute so as to obtain potential oscillation data per ms, a result of performing Fourier transform onto data obtained by multiplying the potential oscillation data by a window function is indicated in a coordinate system having an X axis representing a frequency and a Y axis representing an amplitude, and a third frequency spectrum is a frequency spectrum at the flow velocity of 1 m/minute and a fourth frequency spectrum is a frequency spectrum at the flow velocity of 10 m/minute,

the third frequency spectrum has a maximum peak in a range of a frequency of 0.2 Hz or more and a frequency of 10 Hz or less,

a frequency at an amplitude P3 of the maximum peak is F3 in the third frequency spectrum, and a ratio P4/P3 of an amplitude P4 of the fourth frequency spectrum at the frequency F3 to the amplitude P3 is 0.5 or less.

FIG.1

$O_2 + H_2O$

$H_2 + H_2O$

10

3B

22

13b

13

7

V

2B

4b

OH-

21

13a

4B

4a

4A

21b

21a

3A

2A

22b 22a

7

V

$H_2O$
(ALKALINE AQUEOUS
SOLUTION)

$H_2O$
(ALKALINE AQUEOUS
SOLUTION)

18

FIG.2

FIG.3

FIG.4

FIG.5

## INTERNATIONAL SEARCH REPORT

International application No.

**PCT/JP2023/015597**

### A. CLASSIFICATION OF SUBJECT MATTER

*C25B 9/00*(2021.01)i; *C25B 1/04*(2021.01)i; *C25B 9/19*(2021.01)i; *C25B 11/031*(2021.01)i
FI:   C25B9/00 A; C25B1/04; C25B9/19; C25B11/031

According to International Patent Classification (IPC) or to both national classification and IPC

### B. FIELDS SEARCHED

Minimum documentation searched (classification system followed by classification symbols)

C25B1/00-15/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2020/235237 A1 (SUMITOMO ELECTRIC INDUSTRIES, LTD.) 26 November 2020 (2020-11-26) paragraphs [0033], [0055]-[0060], fig. 3, 8 | 1-2 |
| A | | 3-4 |
| A | JP 2015-536383 A (INDUSTRIE DE NORA S.P.A) 21 December 2015 (2015-12-21) | 1-4 |
| A | WO 2013/191140 A1 (ASAHI KASEI KABUSHIKI KAISHA) 27 December 2013 (2013-12-27) | 1-4 |
| A | WO 2018/199025 A1 (SUMITOMO ELECTRIC INDUSTRIES, LTD.) 01 November 2018 (2018-11-01) | 1-4 |

☐ Further documents are listed in the continuation of Box C.      ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **03 July 2023** | **11 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/015597**

| Patent document cited in search report | | | Publication date (day/month/year) | Patent family member(s) | | | Publication date (day/month/year) |
|---|---|---|---|---|---|---|---|
| WO | 2020/235237 | A1 | 26 November 2020 | US | 2021/0119229 | A1 | |
| | | | | paragraphs [0065], [0087]-[0092], fig. 3, 8 | | | |
| | | | | EP | 3798335 | A1 | |
| | | | | CN | 112313367 | A | |
| JP | 2015-536383 | A | 21 December 2015 | US | 2015/0240368 | A1 | |
| | | | | WO | 2014/060417 | A1 | |
| | | | | EP | 2909363 | A1 | |
| | | | | UY | 35080 | A | |
| | | | | TW | 201419647 | A | |
| | | | | AU | 2013334007 | A | |
| | | | | CN | 104662203 | A | |
| | | | | KR | 10-2015-0070293 | A | |
| | | | | IL | 237320 | A | |
| | | | | AR | 92998 | A | |
| | | | | DK | 2909363 | T | |
| | | | | ES | 2678268 | T | |
| | | | | IT | MI20121736 | A1 | |
| WO | 2013/191140 | A1 | 27 December 2013 | US | 2015/0203976 | A1 | |
| | | | | EP | 2862960 | A1 | |
| | | | | AU | 2013278446 | A | |
| | | | | CN | 104364425 | A | |
| | | | | TW | 201406995 | A | |
| | | | | AU | 2016266062 | A | |
| | | | | AU | 2018282439 | A | |
| | | | | DK | 2862960 | T | |
| WO | 2018/199025 | A1 | 01 November 2018 | US | 2020/0040471 | A1 | |
| | | | | EP | 3617348 | A1 | |
| | | | | CN | 110546308 | A | |

Form PCT/ISA/210 (patent family annex) (January 2015)

**REFERENCES CITED IN THE DESCRIPTION**

**Patent documents cited in the description**

- JP 2022138136 A
- WO 2021200376 A
- WO 2019163256 A